# EUROPÄISCHE PATENTANMELDUNG

(11) **EP 1 380 535 A1**
(43) Veröffentlichungstag der Anmeldung: **14.01.2004**
(21) Anmeldenummer: 03014953.8
(22) Anmeldetag: 01.07.2003
(51) Int. Cl.: B66F 9/075, E02F 9/16

(54) **Mobile Arbeitsmaschine mit einer elastisch gelagerten Fahrerkabine**

(30) Priorität: 12.07.2002 DE 10231664
(71) Anmelder: STILL GMBH, D-22113 Hamburg (DE)
(72) Erfinder: Gerdes, Torsten, 21465 Wentorf (DE); Tödter, Joachim, Dr., 22941 Bergteheide (DE)
(74) Vertreter: Lang, Michael

(57) **Zusammenfassung**

Gegenstand der Erfindung ist eine mobile Arbeitsmaschine, insbesondere Flurförderzeug, mit einer Fahrerkabine (1), die gegenüber einem Rahmen (2) der Arbeitsmaschine elastisch gelagert ist. Erfindungsgemäß ist zur Lagerung der Fahrerkabine (1) an dem Rahmen (2) mindestens ein Hebel (6) vorgesehen, der mittels eines ersten Lagers (4) mit dem Rahmen (2) und mittels eines zweiten Lagers (3) mit der Fahrerkabine (1) verbunden ist, Mindestens ein Lager (3, 4) weist ein elastisch verformbares Element (7) auf. Bevorzugt ist mindestens ein Lager (3, 4) von einer Torsionsbuchse gebildet. Die Hebel (6) sind derart angeordnet und die Lager (3, 4) sind derart ausgebildet, dass die Fahrerkabine (1) relativ zu dem Rahmen (2) ausschließlich translatorisch in im Wesentlichen vertikaler Richtung und/oder rotatorisch um eine im Wesentlichen horizontale Querachse der Arbeitsmaschine bewegbar ist.

## Beschreibung

Die Erfindung betrifft eine mobile Arbeitsmaschine, insbesondere Flurförderzeug, mit einer Fahrerkabine, die gegenüber einem Rahmen der Arbeitsmaschine elastisch gelagert ist.

Fahrerkabinen von mobilen Arbeitsmaschinen des Standes der Technik werden häufig mit elastischen Gummilagern an dem Rahmen der Arbeitsmaschine befestigt. Hiermit wird jedoch hauptsächlich eine Abkoppelung akustischer Schwingungen von der Fahrerkabine erreicht. Die Schwingungsbelastung der Bedienperson der Arbeitsmaschine durch niederfrequente Schwingungen, sogenannten Humanschwingungen, wird durch die elastischen Gummilager nicht nennenswert vermindert. Deshalb sind mobile Arbeitsmaschinen in der Regel mit gefederten Sitzen ausgerüstet, die zur Schwingungsminderung dienen, aber nur den Rumpf der Bedienperson entlasten. Darüber hinaus müssen die bekannten gefederten Sitze auf das Gewicht des jeweiligen Bedieners eingestellt werden. Dies wird jedoch im Arbeitsalltag oft vergessen, so dass die Sitze dann nicht schwingungsmindernd wirken, sondern die Schwingungen unter Umständen sogar noch verstärken.

Der vorliegenden Erfindung liegt daher die Aufgabe zugrunde, eine mobile Arbeitsmaschine zur Verfügung zu stellen, bei der die Fahrerkabine von Schwingungen des Rahmens der Arbeitsmaschine im Wesentlichen abgekoppelt ist. Ein manuelles Einstellen der Vorrichtung zur Schwingungsdämpfung auf das Gewicht der Bedienperson soll dabei nicht erforderlich sein. Darüber hinaus soll die Vorrichtung zur Schwingungsdämpfung nur wenig Bauraum beanspruchen.

Diese Aufgabe wird erfindungsgemäß dadurch gelöst, dass zur Lagerung der Fahrerkabine an dem Rahmen mindestens ein Hebel vorgesehen ist, der mittels eines ersten Lagers mit dem Rahmen und mittels eines zweiten Lagers mit der Fahrerkabine verbunden ist, wobei mindestens ein Lager ein elastisch verformbares Element aufweist. Die Anbindung der Fahrerkabine an den Rahmen erfolgt dabei mittels mindestens eines Hebels. Die Hebel sind derart angeordnet, dass sie bei einer Relativbewegung zwischen Fahrerkabine und Rahmen um eine Querachse geschwenkt werden. Die Feder- und Dämpfungswirkung dieser Anordnung auf die Fahrerkabine wird durch das an mindestens einem Lager angeordnete elastische Element erreicht. Das elastische Element verformt sich bei einer Relativbewegung zwischen Fahrerkabine und Rahmen und kann dadurch das Übertragen von Schwingungen von dem Rahmen auf die Fahrerkabine verhindern. Während einer elastischen Verformung erzeugt das elastische Element eine Rückstellkraft, die dafür sorgt, dass sich die Fahrerkabine anschließend relativ zu dem Rahmen in ihre Ausgangsposition zurückbewegt.

Das elastisch verformbare Element weist eine besonders gute innere Dämpfung auf, wenn es als gummielastisch verformbares Element ausgeführt ist. Diese innere Dämpfung des elastischen Elements führt zu einer Dämpfung der Lagerung der Fahrerkabine an dem Rahmen und gewährleistet damit ein rasches Abklingen jeder Schwingungsbewegung der Fahrerkabine relativ zu dem Rahmen.

Gemäß einer vorteilhaften Ausgestaltung ist mindestens ein Lager von einer Torsionsbuchse gebildet. Die Torsionsbuchse besteht im Wesentlichen aus einer zentralen Achse und einem koaxial zu der Achse angeordneten zylindrischen Außenkörper. Zwischen der Achse und dem Außenkörper befindet sich das elastische Element, das bei einem Verdrehen des Außenkörpers relativ zu der Achse verformt wird. Im vorliegenden Anwendungsfall kann die Achse der Torsionsbuchse von einem rechtwinkligen Fortsatz eines Hebels gebildet sein.

Die Torsionsbuchse ermöglicht dabei eine Rotationsbewegung des Hebels relativ zu dem Rahmen bzw. zu der Fahrerkabine in genau einer Rotationsrichtung, wobei gleichzeitig eine Rückstellkraft erzeugt wird. In allen anderen Bewegungsrichtungen weist die Torsionsbuchse eine weitaus geringere Elastizität auf.

Um den sich bei einer vertikalen Bewegung der Fahrerkabine ändernden Abstand der Lager des Hebels an der Fahrerkabine und am Rahmen ausgleichen zu können, ist mindestens ein Hebel mit einem Längenausgleichselement verbunden.

Eine besonders einfach herstellbare Ausführung des Hebels liegt vor, wenn mindestens ein Hebel starr ausgebildet ist.

Wenn mindestens ein Hebel elastisch verformbar ausgebildet ist, verstärkt sich die Elastizität der Lagerung der Fahrerkabine noch weiter.

Zur Lagerung der Fahrerkabine an dem Rahmen sind mindestens drei, vorzugsweise mindestens vier Hebel vorgesehen. Drei Hebel reichen aus, um die räumliche Position der Fahrerkabine relativ zu dem Rahmen festzulegen. Mit vier Hebeln kann der in der Regel rechteckigen Grundfläche der Fahrerkabine Rechnung getragen werden, wobei die Hebel dann symmetrisch im unteren Bereich der Fahrerkabine angeordnet sein können.

Vorteilhafterweise sind die Hebel derart angeordnet und die Lager derart ausgebildet, dass die Fahrerkabine relativ zu dem Rahmen ausschließlich translatorisch in im Wesentlichen vertikaler Richtung und/oder rotatorisch um eine im Wesentlichen horizontale Querachse der Arbeitsmaschine bewegbar ist. Es wird damit eine Höhenbewegung nach oben und unten und eine Nickbewegung der Fahrerkabine nach vorne und hinten zugelassen. Andere Bewegungsrichtungen, beispielsweise ein horizontales Verschieben, ein Wanken um die Längsachse oder ein Rollen um eine Hochachse der Arbeitsmaschine sind verhindert.

Gemäß einer zweckmäßigen Weiterbildung der Erfindung ist ein Mittel zum Synchronisieren der Bewegung mindestens zweier Hebel vorgesehen. Die beiden synchronisierten Hebel befinden sich damit stets in der gleichen Winkellage relativ zu dem Rahmen der Arbeitsmaschine. Wenn beispielsweise zwei nebeneinander, am hinteren Ende der Fahrerkabine angeordnete Hebel synchronisiert sind, kann damit ein Wanken der Fahrerkabine verhindert werden.

Gemäß einer ersten möglichen Ausgestaltung weist das Mittel zum Synchronisieren der Bewegung mindestens zweier Hebel mindestens zwei miteinander hydraulisch verbundene Hydraulikzylinder auf. Wenn beispielsweise die Kolbenseiten zweier identischer Hydraulikzylinder miteinander verbunden sind, ist automatisch sichergestellt, dass bei einem Ausfahren des Kolbens des ersten Hydraulikzylinders der Koben des zweiten Hydraulikzylinders in gleichem Maße eingefahren wird. Der erste Hydraulikzylinder kann dann beispielsweise zwischen einem ersten Hebel und der Fahrerkabine, der zweite Hydraulikzylinder zwischen einem zweiten Hebel und dem Rahmen angeordnet sein.

Eine andere mögliche Ausgestaltung sieht vor, dass das Mittel zum Synchronisieren der Bewegung mindestens zweier Hebel mindestens zwei Lenker aufweist, wobei jeder Lenker einerseits mit einem Hebel und andererseits mit dem anderen Lenker gelenkig verbunden ist und wobei jeder Lenker mit dem Rahmen und/oder mit der Fahrerkabine gelenkig verbunden ist. Hierbei wird die Synchronität der Bewegungen der beiden Hebel mittels einer mechanischen Vorrichtung sichergestellt. Um eine Bewegung dieser Anordnung überhaupt zu ermöglichen, sind die gelenkigen Verbindungen der Lenker an der Fahrerkabine und/oder die gelenkige Verbindung der beiden Lenker beispielsweise mittels Gummibuchsen elastisch ausgeführt.

Weitere Vorteile und Einzelheiten der Erfindung werden anhand der in den schematischen Figuren dargestellten Ausführungsbeispiele näher erläutert. Dabei zeigt
- Figur 1: Rahmen und Fahrerkabine einer erfindungsgemäßen mobilen Arbeitsmaschine,
- Figur 2: ein als Torsionsbuchse ausgeführtes elastisches Element,
- Figur 3: ein Längenausgleichselement,
- Figur 4: die Anordnung gemäß Fig. 1 mit einem von Hydraulikzylindern gebildeten Mittel zum Synchronisieren der Bewegung zweier Hebel,
- Figur 5: die Anordnung gemäß Fig. 1 mit einem von Lenkern gebildeten Mittel zum Synchronisieren der Bewegung zweier Hebel.

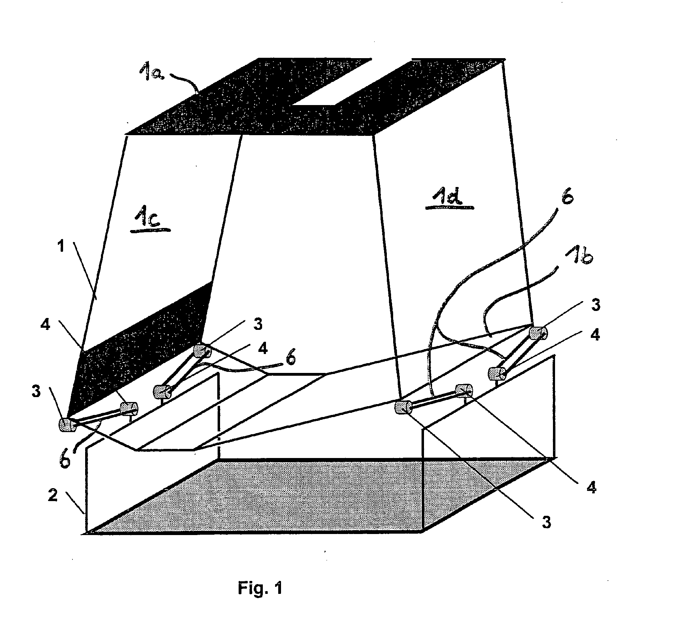

In Figur 1 ist der Rahmen 2 und die Fahrerkabine 1 einer erfindungsgemäßen mobilen Arbeitsmaschine dargestellt. Bei der mobilen Arbeitsmaschine kann es sich beispielsweise um ein Flurförderzeug, insbesondere um einen Gabelstapler handeln. Die Fahrerkabine 1 umfasst ein Fahrerschutzdach 1a und eine Bodenplatte 1b, auf welcher eine Bedienperson ihre Beine abstützt und ein nicht dargestellter Fahrersitz montiert ist. Die Vorderseite der Fahrerkabine ist dabei mit 1c, die Heckseite mit 1d gekennzeichnet.

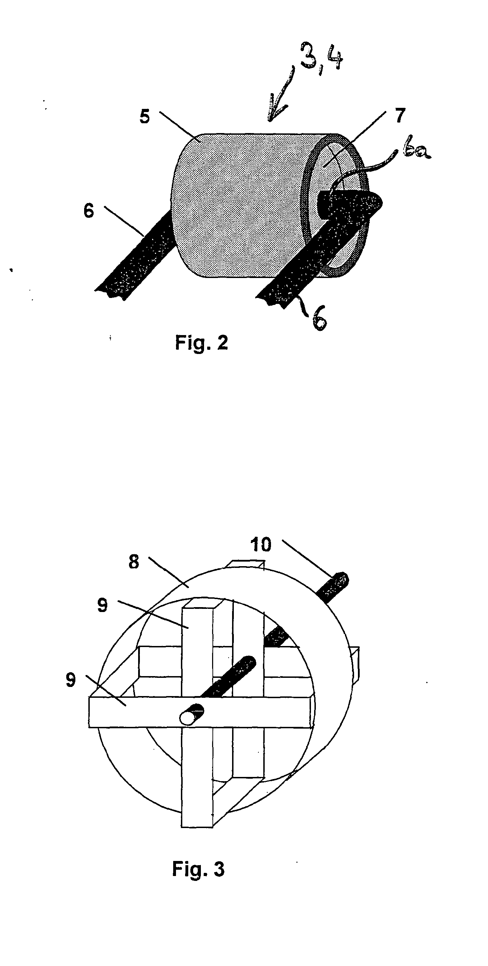

Die Anbindung der Fahrerkabine 1 an den Rahmen 2 erfolgt mit vier Hebeln 6. Im vorliegenden Ausführungsbeispiel ist jeder Hebel 6 von zwei nebeneinander angeordneten, starr miteinander verbundenen Hebelstangen gebildet. An den Verbindungsstellen jedes Hebels 6 mit der Fahrerkabine 1 und dem Rahmen 2 ist ein bewegliches Lager 3 vorgesehen das erfindungsgemäß ein elastisch verformbares Element aufweist (siehe Fig. 2). Durch diese Art der Verbindung der Fahrerkabine 1 mit dem Rahmen 2 ist die Fahrerkabine 1 relativ zu dem Rahmen 2 beweglich. Die Größe der dabei möglichen Relativbewegung erlaubt die Abkoppelung der Fahrerkabine 1 von Schwingungen des Rahmens 2, insbesondere auch im niederfrequenten Bereich zwischen 1 und 6 Hertz. Die Lager 3 ermöglichen dabei vor allem eine vertikale Bewegung der Fahrerkabine 1 relativ zu dem Rahmen 2. Die an der Vorderseite 1c und an der Heckseite 1d der Fahrerkabine 1 angeordneten Hebel 6 können sich dabei unabhängig voneinander bewegen, so dass auch ein Nicken der Fahrerkabine, also eine geringfügige Rotationsbewegung um eine horizontale Querachse der Fahrerkabine 1 möglich ist.

Figur 2 zeigt ein als Torsionsbuchse ausgeführtes Lager 3 zur Verbindung eines Hebels 6 mit dem Rahmen 2 oder mit der Fahrerkabine 1 im Detail. Das Lager 3 weist einen beispielsweise aus Metall ausgeführten Außenmantel 5 auf, welcher mit der Fahrerkabine 1 oder mit dem Rahmen 2 verbunden ist. In der Mitte des Lagers 3 befindet sich ein rechtwinkliger Fortsatz 6a des Hebels 6. Zwischen dem Fortsatz 6a des Hebels und dem Außenmantel 5 befindet sich ein gummielastisches Element 7. Bei einem Verdrehen des Außenmantels 5 um den Fortsatz 6a des Hebels 6 wird dieses gummielastische Element 7 torsionsartig verformt und erzeugt eine Rückstellkraft in Gegenrichtung. Die innere Dämpfung des gummielastischen Elements 7 führt darüber hinaus zu einem raschen Abschwingen einer aufgrund der Federwirkung des gummielastischen Elements 7 möglichen Schwingungsbewegung.

Bei der Anordnung gemäß Fig. 1 ist eine vertikale Bewegung der Fahrerkabine 1 relativ zu dem Rahmen 2 nur dann möglich, wenn für die Hebel 6 ein Längenausgleich ermöglicht ist. Gemäß einer ersten möglichen Ausführung erfolgt dieser Längenausgleich in dem gummielastischen Element des Lagers 3, wobei sich bei einem Längenausgleich die Mittelachsen des Außenmantels und des Fortsatzes 6a des Hebels 6 parallel zueinander verschieben.

Das in Figur 3 dargestellte Längenausgleichselement erlaubt einen Längenausgleich in größerem Umfang. Bei diesem Längenausgleichselement ist ein Außenteil 8 koaxial zu einem Innenteil 10 verschiebbar, wobei das Außenteil 8 und das Innenteil 10 miteinander über Federbleche 9 verbunden sind. Das Längenausgleichselement wird vorzugsweise direkt mit dem zugeordneten Hebel (Pos 4, Fig 1) verbunden, wobei das Innenteil 10 und das Außenteil 8 koaxial zum Hebel angeordnet sind.

Um ein Schwanken der Fahrerkabine 1 in seitlicher Richtung zu verhindern, können die beiden an der Heckseite 1d und/oder die beiden an der Vorderseite 1c der Fahrerkabine 1 angeordneten Hebel 4 derart aneinander gekoppelt werden, dass sie stets eine synchrone Schwenkbewegung ausführen.

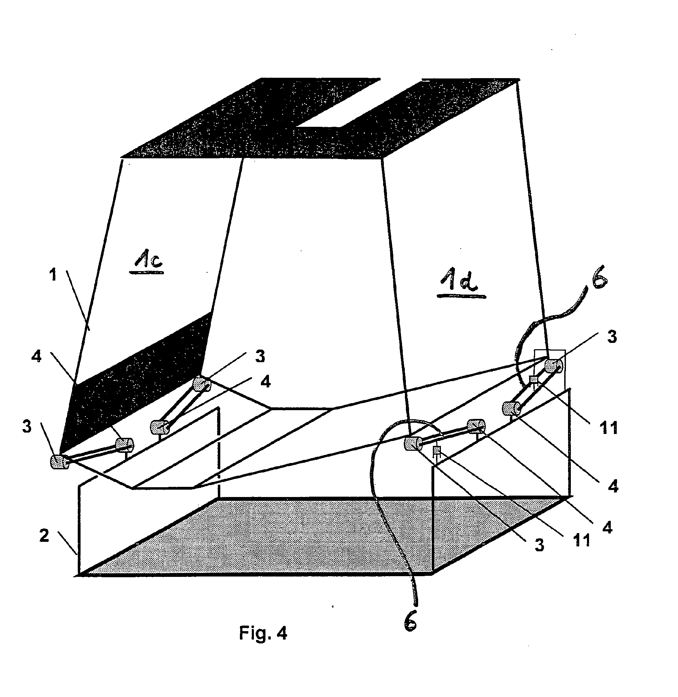

In der Anordnung gemäß Figur 4 erfolgt diese Koppelung über zwei Hydraulikzylinder 11, wobei der erste Hydraulikzylinder 11 zwischen dem Rahmen 2 und einem Hebel 6 und der zweite Hydraulikzylinder 11 zwischen der Fahrerkabine 1 und einem Hebel 6 angeordnet ist. Die Druckräume der beiden Hydraulikzylinder 11 sind über Leitungen 16 miteinander verbunden, so dass beispielsweise der Kolben des ersten Hydraulikzylinders 11 nur ausfahren kann, wenn der Kolben des zweiten Hydraulikzylinders 11 gleichzeitig einfährt. Damit ist eine jederzeit spiegelbildliche Stellung der beiden hinteren Hebel 6 sichergestellt.

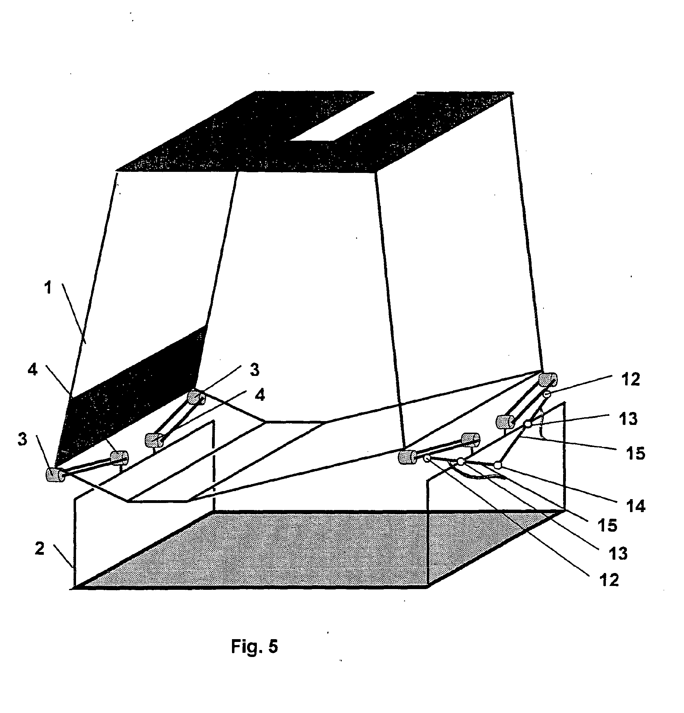

Die gleiche Wirkung wird mit der Anordnung gemäß Figur 5 erreicht, bei der die beiden hinteren Hebel mittels zweier Lenker 15 aneinander gekoppelt sind. Die Gelenke 13 verbinden die Lenker 15 mit dem Rahmen 2, die Gelenke 12 die Lenker mit den Hebeln 6 und das Gelenk 14 die beiden Lenker 15 miteinander. Um eine Bewegung der Hebel 6 zu ermöglichen, muss mindestens eines der Gelenke 12, 13, 14 ein elastisches Element, beispielsweise eine Gummibuchse aufweisen.

Mit der dargestellten Anordnung sind ein Wanken und ein Rollen der Fahrerkabine 1 sicher verhindert. Zur Vermeidung von Bewegungen der Fahrerkabine 1 in Längsrichtung können weitere Hebel vorgesehen sein, die jedoch in den vorliegenden Ausführungsbeispielen nicht dargestellt sind.

## Patentansprüche

1. Mobile Arbeitsmaschine, insbesondere Flurförderzeug, mit einer Fahrerkabine (1), die gegenüber einem Rahmen (2) der Arbeitsmaschine elastisch gelagert ist, **dadurch gekennzeichnet, dass** zur Lagerung der Fahrerkabine (1) an dem Rahmen (2) mindestens ein Hebel (6) vorgesehen ist, der mittels eines ersten Lagers (4) mit dem Rahmen (2) und mittels eines zweiten Lagers (3) mit der Fahrerkabine (1) verbunden ist, wobei mindestens ein Lager (3, 4) ein elastisch verformbares Element (7) aufweist.

2. Mobile Arbeitsmaschine nach Anspruch 1, **dadurch gekennzeichnet, dass** das elastisch verformbare Element (7) als gummielastisch verformbares Element (7) ausgeführt ist.

3. Mobile Arbeitsmaschine nach Anspruch 1 oder 2, **dadurch gekennzeichnet, dass** mindestens ein Lager (3, 4) von einer Torsionsbuchse gebildet ist.

4. Mobile Arbeitsmaschine nach Anspruch 3, **dadurch gekennzeichnet, dass** die Torsionsbuchse eine Rotationsbewegung des Hebels (6) relativ zu dem Rahmen (2) bzw. zu der Fahrerkabine (1) in genau einer Rotationsrichtung ermöglicht, wobei gleichzeitig eine Rückstellkraft erzeugt wird.

5. Mobile Arbeitsmaschine nach einem der Ansprüche 1 bis 4, **dadurch gekennzeichnet, dass** mindestens ein Hebel (6) mit einem Längenausgleichselement verbunden ist.

6. Mobile Arbeitsmaschine nach einem der Ansprüche 1 bis 5, **dadurch gekennzeichnet, dass** mindestens ein Hebel (6) starr ausgebildet ist.

7. Mobile Arbeitsmaschine nach einem der Ansprüche 1 bis 5, **dadurch gekennzeichnet, dass** mindestens ein Hebel (6) elastisch verformbar ausgebildet ist.

8. Mobile Arbeitsmaschine nach einem der Ansprüche 1 bis 7, **dadurch gekennzeichnet, dass** zur Lagerung der Fahrerkabine (1) an dem Rahmen (2) mindestens drei, vorzugsweise mindestens vier Hebel (6) vorgesehen sind.

9. Mobile Arbeitsmaschine nach einem der Ansprüche 1 bis 8, **dadurch gekennzeichnet, dass** die Hebel (6) derart angeordnet und die Lager (3, 4) derart ausgebildet sind, dass die Fahrerkabine (1) relativ zu dem Rahmen (2) ausschließlich translatorisch in im Wesentlichen vertikaler Richtung und/oder rotatorisch um eine im Wesentlichen horizontale Querachse der Arbeitsmaschine bewegbar ist.

10. Mobile Arbeitsmaschine nach einem der Ansprüche 1 bis 9, **dadurch gekennzeichnet, dass** ein Mittel zum Synchronisieren der Bewegung mindestens zweier Hebel (6) vorgesehen ist.

11. Mobile Arbeitsmaschine nach Anspruch 10, **dadurch gekennzeichnet, dass** das Mittel zum Synchronisieren der Bewegung mindestens zweier Hebel (6) mindestens zwei miteinander hydraulisch verbundene Hydraulikzylinder (11) aufweist.

12. Mobile Arbeitsmaschine nach Anspruch 11, **dadurch gekennzeichnet, dass** das Mittel zum Synchronisieren der Bewegung mindestens zweier Hebel (6) mindestens zwei Lenker (15) aufweist, wobei jeder Lenker (15) einerseits mit einem Hebel (6) und andererseits mit dem anderen Lenker (15) gelenkig verbunden ist und wobei jeder Lenker (15) mit dem Rahmen (2) und/oder mit der Fahrerkabine (1) gelenkig verbunden ist.
